# EUROPEAN PATENT APPLICATION

(11) **EP 4 054 066 A1**
(43) Date of publication of application: **07.09.2022**
(21) Application number: 21160105.9
(22) Date of filing: 02.03.2021
(51) Int. Cl.: H02M 3/335

(54) **SYNCHRONOUS FLYBACK CONVERTER**

(71) Applicant: Tridonic GmbH & Co. KG, 6851 Dornbirn (AT)
(72) Inventor: Schertler, Markus, 6850 Dornbirn (AT); Klotz, Reimar, 6850 Dornbirn (AT)
(74) Representative: Rupp, Christian

(57) **Abstract**

The invention relates to a synchronous flyback converter (100), comprising a galvanic isolation stage (101); a first controllable switch (103) on a primary side of the galvanic isolation stage (101); a second controllable (105) switch on a secondary side of the galvanic isolation stage (101); and a control unit (107). The control unit (107) is configured to control a switching operation of the first controllable switch (103) and the second controllable switch (105) based on a first control loop which controls an output current of the flyback converter (100) to a target value, and based on a second control loop which controls a negative peak value of a secondary side current to a reference value.

## Description

### TECHNICAL FIELD OF THE INVENTION

The invention relates to a synchronous flyback converter and to a method for operating a synchronous flyback converter. In particular, the invention relates to a synchronous flyback converter for use in a driver for luminaires.

### BACKGROUND OF THE INVENTION

A flyback converter is an AC/DC or DC/DC converter that transmits electrical energy from an input side (primary side) to an output side (secondary side), which is galvanically decoupled from the input side by means of a transformer.

For example, a flyback converter can be used to convert a DC voltage supplied at an input to a different voltage level. Thereby, the difference in voltage levels between the input and the output voltage depends on a winding ratio of the transformer.

A flyback converter that has a controllable switch on each of its primary and its secondary side is typically referred to as a synchronous flyback converter. Thereby, the primary side switch can be used to control a current flow on the primary side of the converter and the secondary side switch can be used to control a current flow on the secondary side of the converter.

Generally, the output current of the converter can be adjusted by changing the switch-on time T_{ON} or the resulting primary peak current of the primary side switch. For the sake of high efficiency and to allow for converter output currents close to zero, the current flow on the secondary side needs to be adjusted as well. It is, however, difficult to determine and to control this secondary side current, in particular, without implementing a dedicated current measurement circuit on the secondary side.

Thus, it is an objective to provide an improved synchronous flyback converter and an improved method for operating a synchronous flyback converter, which avoid the above-mentioned disadvantages.

### SUMMARY OF THE INVENTION

The object of the present invention is achieved by the solution provided in the enclosed independent claims. Advantageous implementations of the present invention are further defined in the dependent claims.

According to a first aspect, the invention relates to a synchronous flyback converter, comprising a galvanic isolation stage; a first controllable switch on a primary side of the galvanic isolation stage; a second controllable switch on a secondary side of the galvanic isolation stage; and a control unit; wherein the control unit is configured to control a switching operation of the first controllable switch and the second controllable switch based on a first control loop which controls an output current of the flyback converter to a target value, and a second control loop which controls a negative peak value of a secondary side current to a reference value.

This achieves the advantage that the output current flow of the flyback converter can be controlled efficiently. In particular, the (negative) current flow of the secondary side current can be used as a control parameter. In terms of resolution, a higher secondary negative peak current is advantageous when it comes to low average converter output currents. Thus, e.g., a low supply current can be achieved by having a high positive current flow on the primary side followed by a high negative current flow on the secondary side of the converter.

In particular, the flyback converter comprises a transformer, having a first winding which is arranged on the primary side of the isolation stage and is connected to the first controllable switch, and a second winding, which is arranged on the secondary side of the isolation stage and is connected to the second controllable switch. Thus, the first controllable switch is a primary side switch of the converter, and the second controllable switch is a secondary side switch of the converter.

The secondary side current can be a current through the second controllable switch of the flyback converter. In particular, the secondary side current is the current that is released by the second winding if the second controllable switch is closed (switched on) and the first controllable switch is opened (switched off). In contrast, a primary side current can be a current through the first controllable switch.

In particular, the secondary side current has a negative gradient if the second controllable switch is closed and the transformer winding on the secondary side is discharging. The maximum negative peak value of the secondary side current may occur, when the second controllable switch is opened (i.e., switched off) again and the discharge of the secondary side winding of the transformer is interrupted. Thus, controlling the negative peak value of the secondary side current to the reference value in the second control loop may refer to regularly adjusting the switch-off time of the secondary side current, such that the switch is opened when the current reaches the reference value.

The output current of the synchronous flyback converter can be the resulting current that is provided at an output port at a secondary side of the galvanic isolation stage. A load that is connected to the synchronous flyback converter can be supplied by the output current. For example, the output current can be adjusted via the switch-on time of the first controllable switch on the primary side. In particular, controlling the output current of the flyback converter to the target value in the first control loop may refer to regularly adjusting the switching operation of the first and/or second controllable switch, such that the output current matches the target value.

The control unit can execute the first control loop and/or the second control loop after each switching cycle to adapt the switching operation. Alternatively, the control unit can execute the control loops only at certain times or events, e.g. during a start- up phase or after a change of a dimming level.

The control unit can be a microcontroller or an ASIC. The first and the second controllable switch can each be transistors, which are configured to receive a control signal from the control unit.

In an embodiment, the synchronous flyback converter further comprises an auxiliary winding, which is arranged on the primary side of the galvanic isolation stage, and which is configured to receive a feedback signal from the secondary side of the galvanic isolation stage. This achieves the advantage that information on the secondary side current and/or the output current can be determined efficiently on the primary side of the converter. In particular, no sensing circuit on the secondary side needs to be foreseen.

Preferably, the feedback signal relates to the secondary side current. The feedback signal may be a voltage signal.

In an embodiment, the control unit is configured to determine a timing of a zero-crossing of the secondary side current based on said feedback signal. This achieves the advantage that information on the secondary side current can be determined efficiently. This information can be used to determine an optimal switch off time of the secondary side switch.

In an embodiment, the control unit is further configured to determine a gradient of the secondary side current during a switch-on time of the second controllable switch, wherein the control unit is further configured to determine a time at which the secondary side current reaches the reference value based on the timing of the zero-crossing and on the determined gradient of the secondary side current. This achieves the advantage that the optimal switch off time of the secondary side switch can be determined efficiently.

In particular, the processing unit can be configured to estimate the secondary side current that is flowing while the second controllable switch is closed based on the timing of the zero-crossing and the gradient of the secondary side current. Said estimation can be used for the second control loop.

In an embodiment, the control unit is configured to determine the gradient of the secondary side current based on the output voltage of the flyback converter and/or based on at least one further electrical characteristic of the secondary side of the galvanic isolation stage. This achieves the advantage that the optimal switch off time of the secondary side switch can be determined efficiently.

In an embodiment the control unit is configured to determine a time at which the secondary side current reaches the reference value based on a timing of a zero-crossing of a primary side current in combination a primary side bus voltage. This achieves the advantage that the time from the secondary switch OFF to the the primary current zero-crossing provides an easier way to determine the secondary side current peak. With this procedure no inductivity and/or secondary side voltage is needed. Only the primary side bus voltage is necessary which is usually constant or well-known and tracked.

In particular, the control unit can be configured to detect the primary side bus voltage and the zero crossing of the primary side current. For example, the control unit is electrically connected to a sense resistor at the primary side of the isolation stage to sense the primary side current. Besides the primary side current zero-crossing and the bus voltage, the control unit can be configured to take a primary side inductivity into account to determine the time at which the secondary side current reaches the reference value.

For example, the electrical characteristic can be an inductivity of the secondary side winding of the transistor. The gradient can be proportional to a ratio of the output voltage and said inductivity.

In an embodiment, the control unit is configured to set a switch off time of the first controllable switch to adjust the time or current peak at which the secondary side current reaches the reference value for any given output current of the flyback converter.

In particular, the primary side current determines the secondary negative current level and, thus, the reference value is influenced by the primary switch on (T_{ON}) time. The secondary switch on time is configured to reach the reference value of the output current only. This output current can be reached with different primary peak current (Iₚₑₐₖ) settings, leading to different secondary negative current levels.

Preferably, the control unit is configured to then switch off the second controllable switch at the determined time or current peak at which the secondary side current reaches the reference value such that the secondary side current has the negative peak at the reference value. This achieves the advantage that the output current flow of the flyback converter can be controlled efficiently.

In an embodiment, the control unit is configured to select the target value of the output current and/or the reference value based on a lookup-table or equation.

Preferably, the reference value is an optimum value for the negative peak of the secondary side current for a given target value of the output current. For example, losses during operation of the converter may be minimized by keeping the negative peak value of the secondary side current at the reference value

The look-up table can be stored in a memory of the control unit. The look-up table can be an operation point dependent look-up table, i.e. a look-up table that stores various output current values and related reference values for different operation points of the flyback converter, e.g. for different loads.

In an embodiment, the control unit is configured to generate at least one PWM signal to control the switching operation of the first controllable switch and/or the second controllable switch. This achieves the advantage that the switches can be controlled efficiently based on both control loops.

In particular, the control unit is configured to supply a first PWM signal to the first controllable switch and a second PWM signal to the second controllable switch. The second PWM signal can be generated by inversion of the first PWM signal and dead time insertion.

Preferably, the second controllable switch is only conducting (i.e., switched on) if the first controllable switch is not conducting (i.e., switched off), and vice-versa. This can prevent unwanted damage to the components of the converter.

According to a second aspect, the invention relates to a driver for luminaires, comprising at least one synchronous flyback converter according to the first aspect of the invention.

The driver can be an LED driver that supplies an LED load with an output current provided by the synchronous flyback converter.

According to a third aspect, the invention relates to a method for operating a synchronous flyback converter, which comprises a galvanic isolation stage, a first controllable switch on a primary side of the galvanic isolation stage, and a second controllable switch on a secondary side of the galvanic isolation stage; wherein the method comprises the steps of:
- executing a first control loop which controls an output current of the flyback converter to a target value;
- executing a second control loop which controls a negative peak value of a secondary side current to a reference value; and
- controlling a switching operation of the first controllable switch and the second controllable switch based on the first control loop and the second control loop.

This achieves the advantage that the output current flow of the flyback converter can be controlled efficiently. In particular, the (negative) current flow of the secondary side current can be used as a control parameter. In terms of resolution, a higher secondary negative peak current is advantageous when it comes to low average converter output currents. Thus, e.g., a low supply current can be achieved by having a high positive current flow on the primary side followed by a high negative current flow on the secondary side of the converter.

In an embodiment, the method further comprises the step of:
- receiving a feedback signal from the secondary side of the galvanic isolation stage by an auxiliary winding, which is arranged on the primary side of the galvanic isolation stage.
This achieves the advantage that information on the secondary side current can be determined efficiently on the primary side of the converter.

In an embodiment, the method further comprises the step of:
- determining a timing of a zero-crossing of the secondary side current based on the feedback signal.
This achieves the advantage that information on the secondary side current can be determined efficiently. This information can be used to determine the optimal switch off time of the secondary side switch.

In an embodiment, the method further comprises the steps of:
- determining a gradient of the secondary side current during a switch-on time of the second controllable switch; and
- determining a time at which the secondary side current reaches the reference value based on the timing of the zero-crossing and the determined gradient of the secondary side current.
This achieves the advantage that the optimal switch off time of the secondary side switch can be determined efficiently.

In an embodiment, the gradient of the secondary side current is determined based on the output voltage of the flyback converter and/or based on at least one further electrical characteristic of the secondary side of the galvanic isolation stage. This achieves the advantage that the optimal switch off time of the secondary side switch can be determined efficiently.

In an embodiment, the method further comprises the step of:
- determining the time at which the secondary side current reaches the reference value based on a timing of a zero-crossing of a primary side current in combination with a primary side bus voltage.

In particular, determining the time from secondary switch OFF until primary current zero-crossing provides an easier way to determine the secondary side current peak. With this procedure no inductivity and/or secondary voltage is needed. Only the primary side bus voltage, which is usually constant or well-known and tracked, and, preferably, a primary side inductivity is necessary.

### BRIEF DESCRIPTION OF THE DRAWINGS

The invention will be explained in the followings together with the figures.
- Fig. 1: shows a schematic diagram of a synchronous flyback converter according to an embodiment;
- Fig. 2: shows a schematic diagram of a synchronous flyback converter according to an embodiment;
- Fig. 3: shows a schematic diagram of a synchronous flyback converter according to an embodiment;
- Fig. 4: shows a diagram of a current flow in a synchronous flyback converter according to an embodiment; and
- Fig. 5: shows a schematic diagram of a driver for luminaires according to an embodiment; and
- Fig. 6: shows a flowchart of a method for operating a synchronous flyback converter according to an embodiment.

### DETAILED DESCRIPTION OF THE PREFERRED EMBODIMENTS

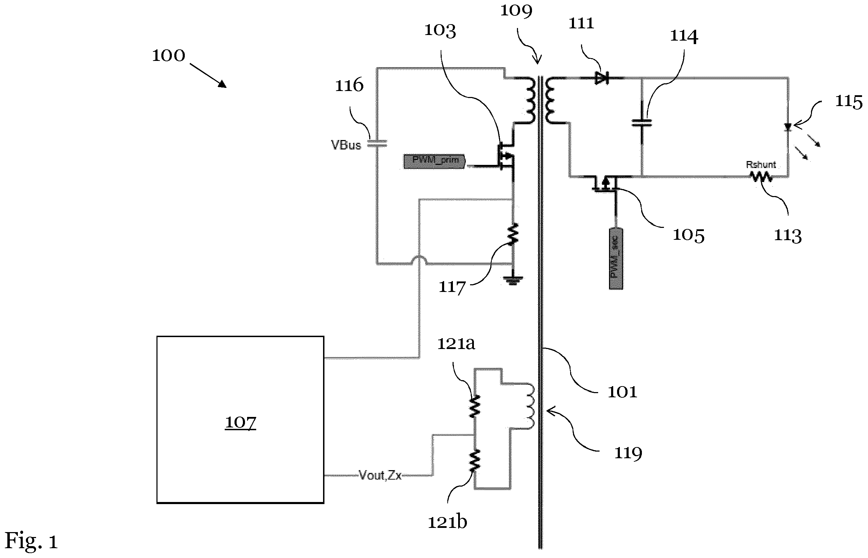

Fig. 1 shows a schematic diagram of a synchronous flyback converter 100 according to an embodiment.

The synchronous flyback converter 100 comprises a galvanic isolation stage 101, a first controllable switch 103 on a primary side of the galvanic isolation stage 101, a second controllable switch 105 on a secondary side of the galvanic isolation stage 101, and a control unit 107. The control unit 107 is configured to control a switching operation of the first controllable switch 103 and the second controllable switch 105 based on a first control loop which controls an output current of the flyback converter 100 to a target value, and based on a second control loop which controls a negative peak value of a secondary side current to a reference value.

The flyback converter 100 further comprises a transformer 109. The transformer 109 has a first winding which is arranged on the primary side of the isolation stage 101, and a second winding, which is arranged on the secondary side of the isolation stage 101.

In particular, the secondary side current is a current through the second controllable switch 105, wherein a primary side current is a current through the first controllable switch 103.

The output current of the synchronous flyback converter 100 can be the resulting current that is provided at an output port on the secondary side of the isolation stage 101. For example, a load 115, such as an LED load, that is connected to the output port on the secondary side can be supplied by the output current.

The secondary side of the converter 100 may comprise a buffer capacitor 114, which can be charged by the secondary side current. The secondary side of the converter 100 can, further, comprise a diode 111 and an optional shunt resistor 113

On the primary side of the isolation stage 101, the converter 100 maybe connected to a voltage source 116 that provides the primary side bus voltage V_{BUS}. The converter 100 can be configured to convert said bus voltage based on the winding ratio of the transformer 109 to another voltage level.

The first control loop and the second control loop are, preferably, feedback loops. In particular, the first control loop is an output current control loop, which controls the output current at the secondary side to a target value. The second control loop keeps the secondary negative peak current value constant by controlling the primary peak current or primary Tₒₙ time, while the output current control is acting. To avoid control oscillations between these two control loops, the reference value of the first control loop may only be changed when the first control loop has settled. Another way to avoid oscillations is to apply different control loop time constants. In other words, one control loop is designed much faster than the other. Preferable the output current control loop is the slower one.

The first and second controllable switch 103, 105 can each be transistors, in particular field effect transistors (FETs), which are each configured to receive a control signal from the control unit 107. Said control signal can be a pulse widths modulated (PWM) signal, which is generated by the control unit based on the first and the second control loop.

For instance, the control unit 107 can be configured to supply the first controllable switch 103 with a first PWM signal (PWM_prim) and the second controllable switch 105 with a second PWM signal (PMW_sec). The second PWM signal may correspond to the first PWM signal after inversion. The control unit 107 may further be configured to insert a dead time in-between the pulses of the first and second PWM signal.

Preferably, the task of the first controllable switch 103 is to control the length of a primary switch-on time (T_{ON}) and, thus, a peak value of the primary side current, whereas the second controllable switch 105 determines the length of a secondary switch-on time and, thus, the negative peak current.

In particular, the output current is changing as a consequence of the first control loop changing the secondary switch-on time. However, to accurately control the current flow, the primary and secondary absolute peaks should be additionally limited. For the primary side current, a primary Iₚₑₐₖ comparator might be implemented, which limits the primary side current Iₚᵣᵢₘ to an absolute required value. To reduces losses to a minimum, the negative current peak of the secondary side current should also be kept at a more or less constant reference value by adjusting the primary peak value, which guarantees a minimum snubber discharge so the converter 100 is working in a zero voltage switching mode. This can be achieved by the second control loop.

Because the secondary side current cannot be measured directly, an auxiliary winding 119 may be arranged on the primary side of the isolation stage 101. The auxiliary winding 119 can be magnetically coupled to the secondary side of the isolation stage 101, e.g. to the secondary side winding of the transformer 109 or to a dedicated sense winding on the secondary side.

The auxiliary winding 119 can be configured to receive a feedback signal V_{SNS} from the secondary side of the galvanic isolation stage 101, wherein the feedback signal may represent a secondary side voltage. The auxiliary winding can be connected to two sensing resistors 121a, 121b and can be configured to forward the feedback signal in the form of a voltage signal V_{out,Zx} to the control unit 107.

The control unit 107 may receive a further feedback signal representing the primary side current. For example, the control unit 107 can be connected to a sensing resistor 117 on the primary side of the isolation stage 101 to receive the further feedback signal in the form of a sense current Iₛₑₙₛₑ. The control unit 107 can be configured to receive this signal in combination with others, like the received signal from the auxiliary winding 119. Based on these signals, the secondary output current can be estimated. The estimated secondary current is the feedback signal of the first current control loop.

In particular, the control unit 107 can be configured to determine a timing of a zero-crossing of the secondary side current based on the feedback signal. For example, the feedback signal can exhibit a local maximum or minimum at the time of the zero-crossing of the secondary side current or primary current. This local maximum or minimum can be detected by the control unit 107.

In addition, the control unit 107 may be configured to determine a gradient of the falling secondary side current while the second controllable switch 105 is closed (i.e., switched on). Based on the timing of the zero-crossing and the determined gradient of the secondary side current, the control unit 107 can determine when the secondary side current reaches the reference value.

In other words, the control unit can determine a time value proportional to a secondary negative peak current (I_{sec_neg}). By using this I_{sec_neg} as control variable, the second control can keep the I_{sec_neg} at the selected reference value. The control parameter for the second control loop can be the peak value of the primary side current I_{prim_peak}. This I_{sec_neg} control can optimize the efficiency of the converter 100 without the need of complex look-up-tables based on cumbersome measurements or formulas. In particular, the second control loop can keep the negative peak current to the constant reference value while the first control loop can control the output current to the target value.

The control unit 107 can be configured to determine the gradient of the descending secondary side current based on the output voltage of the flyback converter 100 and/or at least one further electrical characteristic of the secondary side of the galvanic isolation stage 101. For example, the electrical characteristic can be the inductivity of the secondary side winding of the transistor 109.

Furthermore, the time between a secondary switch OFF to a zero-crossing of a primary side current provides an even easier way to determine the secondary side current peak. With this procedure no inductivity and/or secondary voltage is needed. Only the primary side bus voltage is necessary which is usually constant or well-known and tracked.

The control unit 107 can be a microcontroller or an ASIC.

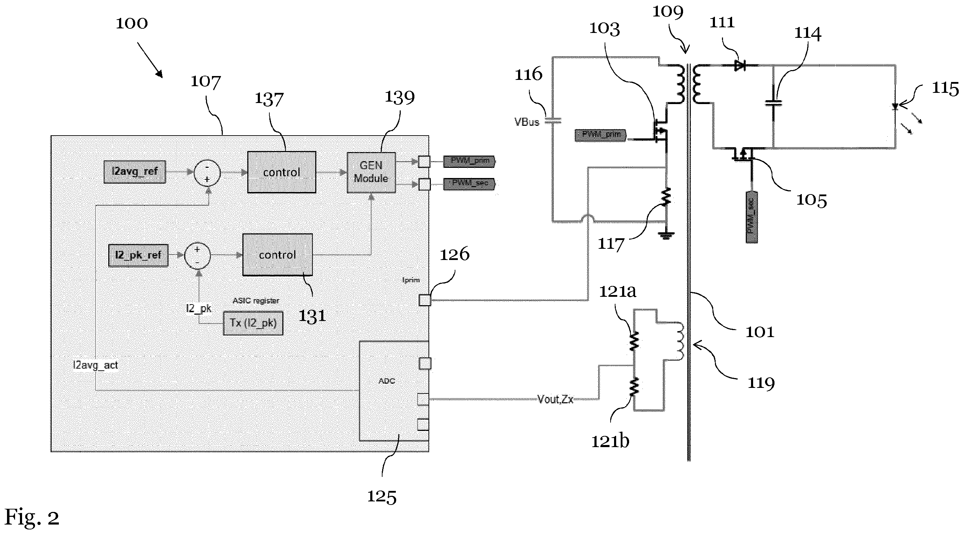

Fig. 2 shows a schematic diagram of the synchronous flyback converter 100 according to an embodiment.

In particular, Fig. 2 shows a possible implementation of the control unit 107. Besides said control unit 107, the flyback converter 100 shown in Fig. 2 is essentially identical to the flyback converter 100 shown in Fig. 1.

Fig. 2 shows that the control unit 107 may comprise an ADC (analog-to-digital converter) 125 that is configured to receive the voltage signal V_{out,Zx} from the auxiliary winding 119. V_{out,Zx} represents the feedback signal from the secondary side and, thus, contains information on the secondary side current. The control unit 107 may further comprise an input port 126 that is configured to receive the further feedback signal representing the primary side current Iₚᵣᵢₘ.

Based on the feedback signal from the secondary side and/or the further feedback signal from the primary side, the control unit can be configured to calculate an estimation of the output current of the converter I_{2avg_act}, i.e. the current that is supplied to the connected load 115 on the secondary side. In particular, the output current may be determined by averaging the primary side current.

The control unit 107 can comprise a first processing unit 137, e.g. a first PI controller, which is configured to compare the estimated output current I_{2avg_act} to a target value of the output current I_{2avg_ref}. The result of said comparison can be fed to a PWM generation module 139, which is configured to generate the PWM signal for controlling the switches 103, 105.

The first processing unit 137 and/or the PWM generation module 139 can be configured to execute the first control loop, which controls the output current of the flyback converter to the target value, i.e. which adapts the switching operation of the second controllable switch 105 until the estimated output current I_{2avg_act} matches the target value I_{2avg_ref}.

The control unit 107 can further comprise a second processing unit 131, e.g. a second PI controller, which is configured to determine an optimal switch-off time of the second controllable switch 105. Therefore, the second processing unit 131 may first preset the reference value to a suitable operating point dependent value for the negative current peak of the secondary side current. Ideally, the secondary side switch will be left conducting (switched on) until the estimated secondary side negative peak I_{2_pk} has been reached.

Subsequently, the second processing unit 131 may analyze the feedback signal to determine a timing of the zero-crossing of the secondary side current. The second processing unit 131 can further determine the gradient of the descending secondary side current, while the second controllable switch 105 is closed (switched on). Based on the timing of the zero-crossing and said gradient, the second processing unit 131 can be configured to determine the time at which the secondary side current reaches the reference value I_{2_pk_ref}. Said time may be fed to the PWM generation module 139.

Preferably, the estimation of the secondary side current, in particular the gradient of said current, is performed by taking into account the electrical characteristics of the secondary side of the converter 100 and/or the output voltage of the converter 100. The higher the output voltage, the higher the negative gradient of the secondary side current. Knowing the electrical characteristics of the secondary side of the converter 100, the output voltage Vₒᵤₜ, and the timing of the zero crossing of the falling secondary side current ZX, the secondary side negative current at a given time after the ZX event can be estimated. In this way, the time value at which the secondary side current reaches the reference value can be accurately determined.

Furthermore, the time between a secondary switch OFF to a zero-crossing of a primary side current provides an even easier way to determine the secondary side current peak. With this procedure no inductivity and/or secondary voltage is needed. Only the primary side bus voltage is necessary which is usually constant or well-known and tracked.

The second processing unit 131 and/or the PWM generation module 139 can be configured to execute the second control loop, which controls the negative peak value of a secondary side current to the reference value, i.e. controls the primary side switch and therefore the primary side peak current. As a consequence, the first control loop will readjust the secondary current such, that the output current is kept at the same value. As a result, the secondary current peak will change to the desired negative current peak value.

For example, the target value I_{2avg_ref} and the reference value I_{2_pk_ref} can each be stored in a look-up-table of the control unit 107, in particular an operation point dependent look-up table. The look-up-table can be stored in a memory of the control unit 107. or controlled externally by another control or user input.

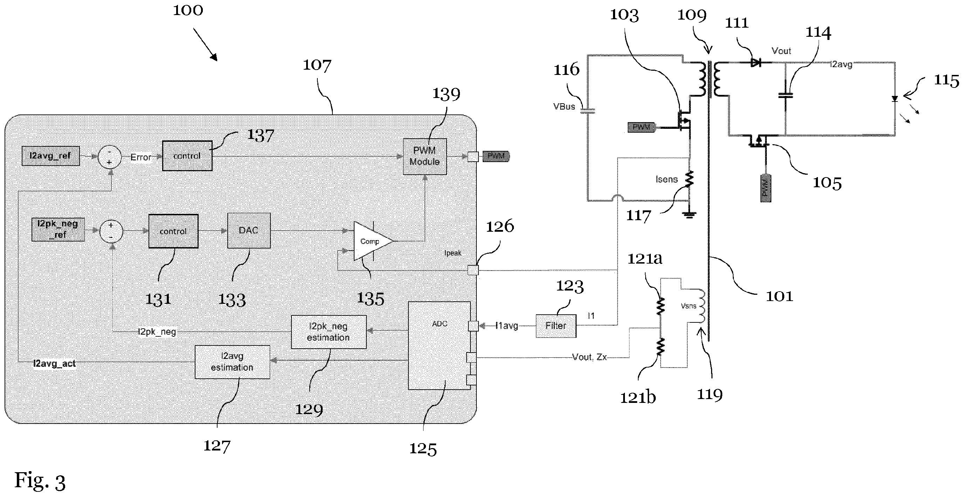

Fig. 3 shows a schematic diagram of the synchronous flyback converter 100 according to an embodiment. In particular, Fig. 3 shows another possible implementation of the control unit 107 from Fig. 1 or 2.

The control unit 107 shown in Fig. 3 may receive the further feedback signal from the primary side of the isolation stage at the input port 126 and at the ADC 125, wherein a filter 123 can be connected before the ADC 125 to generate a signal I_{1avg} that represents an average of the primary side current.

The control unit 107 may further comprise an output current estimation module 127, which is configured to estimate the output current I_{2avg} and feed said estimation to the first processing unit 137.

The control unit 107 may further comprise a negative peak value estimation module 129, which is configured to determine a negative current peak value of the secondary side current I_{2pk_neg}. Said value can be fed to the second processing unit 131, which can compare I_{2pk_neg} with the reference value I_{2pk_neg_ref}. A signal resulting from said comparison can be fed to a digital-to-analog (DAC) converter 133 and a comparator 135, which compares said signal to a peak value of the primary side current Iₚₑₐₖ. A result of said comparison can, further, be fed to the PWM generation module 139. For example, the primary side current Iₚₑₐₖ can be the control parameter for keeping the negative peak value of the secondary side current at the reference value.

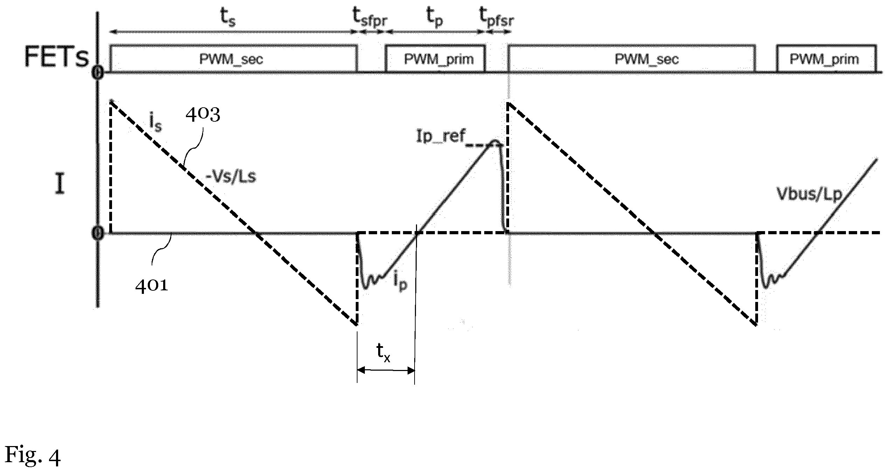

Fig. 4 shows a schematic diagram of the current flow in a synchronous flyback converter according to an embodiment.

In Fig. 4, the primary side current Iₚ (shown as a continuous line 401) and the secondary side current Iₛ (shown as a dashed line 403) are plotted over time. In addition, Fig. 4 shows a diagram indicating the first PWM signal (PWM_prim), which is applied to the first controllable switch 103, and the second PWM signal (PWM_sec), which is applied to the second controllable switch 105.

During a switch-on time ts of the second controllable switch 105, the secondary side current falls from a maximum value to a negative peak value. The gradient can, thereby, be proportional to the ratio of the output voltage (here Vₛ) over the inductivity of the secondary side winding Lₛ. The time ts can be controlled via the pulse length of PWM_sec in order to adjust the output current. During ts, the first controllable switch is open (switched off) and, thus, no current is flowing on the primary side.

After ts is reached, the second controllable switch is opened (switched off) and the secondary side current falls to zero and then goes negative. A dead time t_{sfpr} is waited for the primary side current snubber discharge and, thus, soft switching. Subsequently, the first controllable switch 103 is closed (switched on) for a switch-on time tₚ. During tₚ, the primary side current Iₚ rises with a positive gradient, which is proportional to the ratio of the bus voltage V_{bus} and to the inductivity of the primary side winding Lₚ, until it reaches a peak value. Thereby, tₓ marks the time between the negative peak of the secondary side current and a zero-crossing of the primary side current. By controlling the length of PWM_prim, the positive peak value of the primary side current can be controlled to a reference value I_{p_ref}. After switching off (opening) the first controllable switch 103, another dead time t_{pfsr} is waited for the primary side current to fall to zero. Subsequently, the secondary side switch 105 is switched on again.

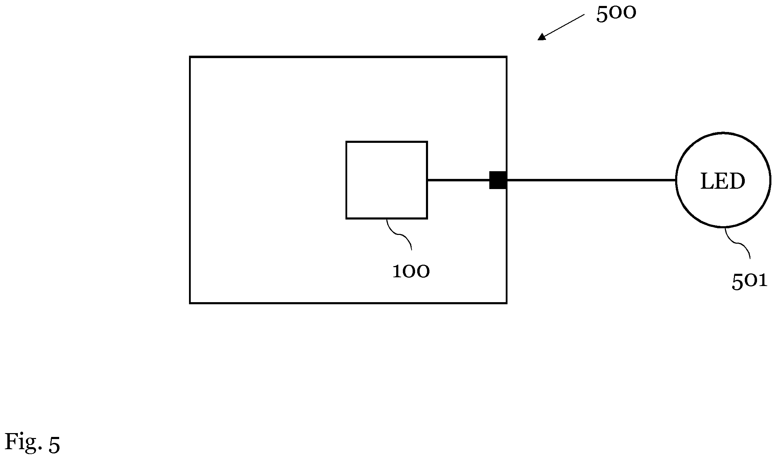

Fig. 5 shows a schematic diagram of a driver 500 for luminaires according to an embodiment.

The driver 500 may comprise the synchronous flyback converter 100 according to any one of the previous Figs. 1, 2 or 3. The driver can be an LED driver, which is configured to drive an LED load 501 that can be connected to an output port of the converter 100. For example, the driver 500 can be connected to a power supply for receiving an input voltage, e.g. a mains voltage. This input voltage can be converted to an LED supply current by the synchronous flyback converter 100.

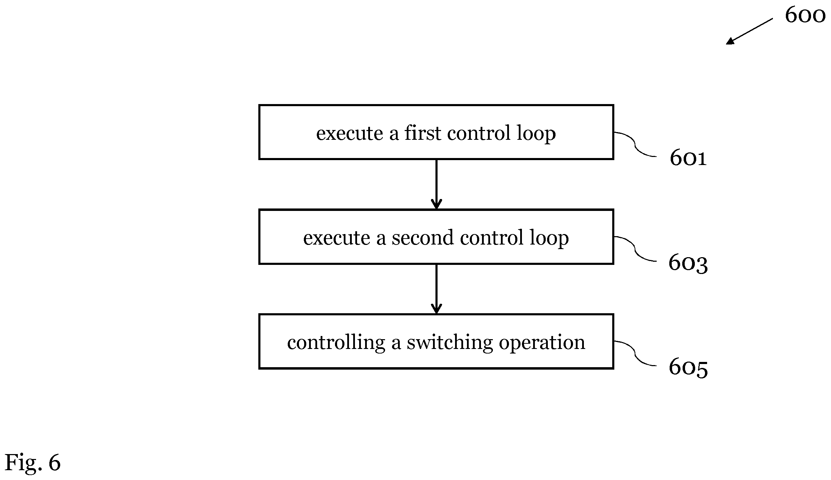

Fig. 6 shows a flowchart of a method 600 for operating a synchronous flyback converter 100 according to an embodiment.

In particular, the method can be performed with the synchronous flyback converter 100 according to any one of the previous Figs. 1, 2 or 3.

The method 600 comprises the steps of:
- executing 601 the first control loop which controls the output current of the flyback converter 100 to the target value;
- executing 603 the second control loop which controls the negative peak value of the secondary side current to the reference value; and
- controlling 605 the switching operation of the first controllable switch 103 and the second controllable switch 105 of the flyback converter 100 based on the first control loop and the second control loop.

The method 600 may further comprise the further steps of:
- receiving the feedback signal from the secondary side of the galvanic isolation 101 stage by the auxiliary winding 119, which is arranged on the primary side of the galvanic isolation stage 101; and
- determining timing of the zero-crossing of the secondary side current based on the feedback signal.

Preferably, to execute the second control loop, the method 600 further comprises the steps of:
- determining the gradient of the secondary side current during a switch-on time of the second controllable switch 105; and
- determining the time at which the secondary side current reaches the reference value based on the timing of the zero-crossing and the determined gradient of the secondary side current; and/or
- determining the time at which the secondary side current reaches the reference value based on a timing of a zero-crossing of a primary side current.

In particular, the gradient of the secondary side current is determined based on the output voltage of the flyback converter 100 and/or based on at least one further electrical characteristic of the secondary side of the galvanic isolation stage 101, in particular the inductance of the secondary side winding.

## Claims

1. A synchronous flyback converter (100), comprising:
a galvanic isolation stage (101);
a first controllable switch (103) on a primary side of the galvanic isolation stage (101);
a second controllable (105) switch on a secondary side of the galvanic isolation stage (101); and
a control unit (107);
wherein the control unit (107) is configured to control a switching operation of the first controllable switch (103) and the second controllable switch (105) based on
- a first control loop which controls an output current of the flyback converter (100) to a target value, and
- a second control loop which controls a negative peak value of a secondary side current to a reference value.

2. The synchronous flyback converter (100) according to claim 1, further comprising:
an auxiliary winding (119), which is arranged on the primary side of the galvanic isolation stage (101), and which is configured to receive a feedback signal from the secondary side of the galvanic isolation stage (101).

3. The synchronous flyback converter (100) according to claim 2, wherein the control unit (107) is configured to determine a timing of a zero-crossing of the secondary side current based on said feedback signal.

4. The synchronous flyback converter (100) according to claim 3, wherein the control unit (107) is further configured to determine a gradient of the secondary side current during a switch-on time of the second controllable switch (105), wherein the control unit (107) is further configured to determine a time at which the secondary side current reaches the reference value based on the timing of the zero-crossing and on the determined gradient of the secondary side current.

5. The synchronous flyback converter (100) according to claim 4, wherein the control unit (107) is configured to determine the gradient of the secondary side current based on the output voltage of the flyback converter (100) and/or based on at least one further electrical characteristic of the secondary side of the galvanic isolation stage (101).

6. The synchronous flyback converter (100) according to any one of the preceding claims, wherein the control unit (107) is further configured to determine a time at which the secondary side current reaches the reference value based on a timing of a zero-crossing of a primary side current in combination with a primary side bus voltage.

7. The synchronous flyback converter (100) according to any one of the preceding claims, wherein the control unit (107) is configured to set a switch off time of the first controllable switch (103) to adjust the time or current peak at which the secondary side current reaches the reference value for any given output current of the flyback converter (100).

8. The synchronous flyback converter (100) according to any one of the preceding claims, wherein the control unit (107) is configured to select the target value of the output current and/or the reference value based on a lookup-table or an equation.

9. The synchronous flyback converter (100) according to any one of the preceding claims, wherein the control unit (107) is configured to generate at least one PWM signal to control the switching operation of the first controllable (103) switch and/or the second controllable switch (105).

10. A driver (500) for luminaires, comprising at least one synchronous flyback converter (100) according to any one of the preceding claims.

11. A method (600) for operating a synchronous flyback converter (100), which comprises a galvanic isolation stage (101), a first controllable switch (103) on a primary side of the galvanic isolation stage (101), and a second controllable switch (105) on a secondary side of the galvanic isolation stage (101); wherein the method (600) comprises the steps of:
- executing (601) a first control loop which controls an output current of the flyback converter (100) to a target value;
- executing (603) a second control loop which controls a negative peak value of a secondary side current to a reference value; and
- controlling (605) a switching operation of the first controllable switch (103) and the second controllable switch (105) based on the first control loop and the second control loop.

12. The method (600) according to claim 11, further comprising the step of:
- receiving a feedback signal from the secondary side of the galvanic isolation stage (101) by an auxiliary winding (119), which is arranged on the primary side of the galvanic isolation stage (101).

13. The method (600) according to claim 12, further comprising the step of:
- determining a timing of a zero-crossing of the secondary side current based on the feedback signal.

14. The method (600) according to claim 13, further comprising the steps of:
- determining a gradient of the secondary side current during a switch-on time of the second controllable switch (105);
- determining a time at which the secondary side current reaches the reference value based on the timing of the zero-crossing and the determined gradient of the secondary side current.

15. The method (600) according to claim 14, wherein the gradient of the secondary side current is determined based on the output voltage of the flyback converter (100) and/or based on at least one further electrical characteristic of the secondary side of the galvanic isolation stage (101).

16. The method (600) according to any one of claims 11 to 15, further comprising the step of:
- determining the time at which the secondary side current reaches the reference value based on a zero-crossing of a primary side current in combination with a primary side bus voltage.
